# EUROPÄISCHE PATENTSCHRIFT

(11) **EP 0 662 434 B1**
(45) Veröffentlichungstag und Bekanntmachung des Hinweises auf die Patenterteilung: **21.10.1998**
(21) Anmeldenummer: 95100219.5
(22) Anmeldetag: 09.01.1995
(51) Int. Cl.: B65G 47/14

(54) **Sortiereinrichtung für Textilien, insbesondere für Putztücher**
Sorting device for textile materials especially for polishing cloths
Dispositif de triage pour textiles, en particulier des tissus de nettoyage

(30) Priorität: 07.01.1994 DE 9400134 U
(43) Veröffentlichungstag der Anmeldung: 12.07.1995
(73) Patentinhaber: MEWA Textil-Service AG, D-65189 Wiesbaden (DE)
(72) Erfinder: Küttelwesch, Rudolf, D-65527 Niedernhausen (DE); Braun, Harald, D-55411 Bingen (DE)
(74) Vertreter: Tergau, Enno, Dipl.-Ing.

(56) Entgegenhaltungen:
- EP-A- 0 136 756
- DE-A- 2 757 077
- US-A- 2 602 535
- PATENT ABSTRACTS OF JAPAN vol. 5 no. 105 (M-077) ,8.Juli 1981 & JP-A-56 048322 (HITACHI) 1.Mai 1981,

## Beschreibung

Die Erfindung betrifft eine Sortiereinrichtung mit den Merkmalen des Oberbegriffs des Anspruches 1 (**US-A 2 602 535**).

In der gewerblichen und industriellen Fertigung ist es bekannt, Putztücher oder Lappen - nachfolgend kurz als "Tücher" bezeichnet - für die Beseitigung verschiedenster Verunreinigungen zu verwenden. Hierfür sind einerseits Papier- oder Zellstofftücher bekannt. Nachteilig ist dabei, daß sie nur einmal benutzt werden können und dann entsorgt werden müssen. Es werden deshalb bevorzugt textile Tücher verwendet. Diese haben den Vorteil, daß sie gewaschen werden können und nach dem Waschen wieder voll einsetzbar sind.

Weiter ist es üblich, verschmutzte Tücher von einem Dienstleister durch gewaschene Tücher ersetzen zu lassen. Der Dienstleister liefert die gewaschenen Tücher und holt die verschmutzten Tücher zum Waschen ab. Das Waschen erfolgt zentral in Waschbetrieben des Dienstleisters. Hierbei tritt das Problem auf, daß der Kunde die Tuchmenge zurückerhalten muß, die er dem Dienstleister zum Waschen überlassen hat. Es besteht hier also das Problem, die gewaschenen Tücher zu zählen, um sie dann wiederum zu Losen in den vorgegebenen Stückzahlen zusammenzufassen.

Nach dem Waschen und Trocknen kommen die Tücher als Haufwerk aus der Wasch- und Trockeneinrichtung. Bislang werden die einzelnen Tücher dann manuell dem Haufen entnommen. Nach Überprüfung ihrer weiteren Einsatztauglichkeit durch persönliche Inaugenscheinnahme werden sie auf ein Förderband gelegt, durch eine Zähleinrichtung gefördert und am Ende des Förderbandes zu den gewünschten Losen zusammengefaßt. Diese manuelle Vereinzelung und Sortierung der Tücher ist sehr kostenintensiv.

Bei solchen Tüchern besteht das besondere Problem, daß sie keine stabile Geometrie bzw. Umrißform aufweisen. Durch US-A-2 602 535 ist bereits eine Vereinzelungsvorrichtung generell für Textilien - hier vereinfacht "Tücher" genannt - bekannt geworden. Sie besteht aus einem in einer vertikalen Ebene endlos umlaufenden Förderband, welches auf seinem Umfang verteilt angeordnete Mitnehmerhaken aufweist. Die Umlenkrollen dieses Umlaufbandes sind so positioniert, daß das Umlaufband in Blickrichtung seiner "Rotationsachse", also der Achsen seiner Umlenkrollen, die Form eines auf einer Kante stehenden Dreiecks aufweist. Die Tücher werden dem Umlaufband durch ein horizontales Förderband zugeführt, dessen Förderrichtung etwa in der Umlaufebene des Umlaufbandes liegt. Die Zuführung erfolgt im unteren Umlenkbereich des Umlaufbandes mit der Folge, daß das Förderband mit dem aufsteigenden Trum des Umlaufbandes einen spitzwinkligen Zwickel bildet, in welchem sich die Tücher als Haufwerk ballen. Nach Feststellungen des Erfinders liegen dieselben Verhältnisse dann vor, wenn anstelle eines auf seinem Außenmantel mit Mitnehmern bestückten Umlaufbandes eine in sich stabile zylindrische Trommel mit ebenfalls auf ihrem Außenmantel mit Mitnehmerhaken verwendet wird. Die in Richtung der Rotationsebene einer solchen Mitnehmertrommel zugeführten Tücher ballen sich im Übergabebereich zu einem Haufwerk, welches durch die Mitnehmer der Mitnehmertrommel nicht etwa durch Mitnahme von einzelnen Tüchern entwirrt sondern als Haufwerksrolle auf dem Förderband in eine eigenständige Rotation versetzt wird, wobei sich die Mitnehmertrommel und die HaufwerksroIle wie zwei miteinander kämmende Zahnräder verhalten.

Es ist grundsätzlich bekannt, zur Vereinzelung von festen, hinsichtlich ihrer Konsistenz stabilen und auch meistenteils hinsichtlich ihrer Umrißform exakt vorbestimmten Gegenständen Rotationstrommeln mit auf ihrem Innenmantel angeordneten Mitnehmern zu verwenden (US-A-4 731 802; DE-A-566 007; DE-A-27 57 077, Fig. 16).Jedoch sind die hieraus zu ziehenden Lehren nicht auf eine Vereinzelung amorpher Gegenstände, wie z.B. Tücher, anwendbar.

Aus der JP-A-56 048 322 ist weiterhin eine Sortiermaschine für weiche Gegenstände bekannt, bei der über eine Rotationstrommel eine Vorsortierung der zu sortierenden Gegenstände stattfindet. Dabei wird jeweils eine kleine Anzahl dieser Gegenstände von einem Mitnehmer erfaßt und einer Vereinzelungsvorrichtung zugeführt. Diese besteht aus mehreren, senkrecht zur Drehachse der Rotationstrommel rotierenden Walzen. Je einer der zu sortierenden Gegenstände wird von außenseitig auf einer der Walzen angebrachten dornenartigen Mitnehmern aufgespießt und in horizontale Richtung abgelenkt, wo er von einem Förderband erfaßt und abtransportiert wird.

Ausgehend vom Stand der Technik liegt der Erfindung die Aufgabe zugrunde, eine Sortiereinrichtung zur maschineller Vereinzelung von Textilien, insbesondere Tüchern zu schaffen. Diese Aufgabe ist durch die Merkmalskombination des Anspruchs 1 gelöst.

Die Sortiereinrichtung nach Anspruch 1 besteht aus einer um eine horizontale Rotationsachse drehbar gelagerten Trommel, an deren Innenmantel mehrere Mitnehmer angeordnet sind. Die Tücher werden zunächst in die Trommel eingebracht. Die Mitnehmer greifen jeweils ein Tuch aus dem Haufwerk heraus und geben es vereinzelt an eine Abfördereinrichtung weiter. Die Sortiereinrichtung ermöglicht ein kontinuierliches und schnelles Sortieren "rund um die Uhr". Sie kann problemlos im Mehrschichtbetrieb gefahren werden. Außerdem schließt sie die letzte "manuelle Lücke" in einem vollständig mechanisierten Waschsystem, welches die Tücher selbsttätig maschinengesteuert durchlaufen und fertig abgepackt verlassen.

Die Mitnehmer sind in Anpassung an die Tücher als in Rotationsrichtung der Trommel eingebogene, hakenartige Dornen ausgeführt. Durch die relativ kurze dornartige Ausführung ist sichergestellt, daß jeder Mitnehmer auch nur ein Tuch greift. Die abgewinkelte Hakenform der Dornen bewirkt eine Verbesserung der Verbindung zwischen dem mitzunehmenden Tuch und den Dornen (Anspruch 4).

Zur Gewährleistung einer kontinuierlichen Vereinzelung und Sortierung sind die Dornen in gleichen Abständen in Umfangsrichtung verteilt auf dem Innenmantel der Trommel angeordnet. In der in Trommeldrehrichtung rotierenden Trommel liegt die zu sortierende Menge der Tücher ein. Jeder Mitnehmer greift sich aus dieser Menge ein Tuch und fördert es aus dem Haufwerk heraus. Sobald der Mitnehmer im Zenit seines Rotationsweges seine Abgabestellung erreicht hat, fällt das Tuch vom Mitnehmer auf einen Abförderer und wird aus der Sortiereinrichtung herausgefördert. Durch die gleichbleibenden Abstände der Dornen ist eine gleichbleibende Taktfrequenz der auf das Förderband fallenden Tücher gewährleistet.

Es ist vorteilhaft, die dornenartigen Mitnehmer auf einer Rotationskreislinie auf dem Innenmantel der Trommel anzuordnen. Die Mitnehmer bilden dann einen Dornenkranz. Zur Steigerung der Maschinenleistung ist es vorteilhaft, in Axialrichtung der Rotationsachse mehrere derartige Dornenkränze nebeneinander anzuordnen. Um zu verhindern, daß die von axial nebeneinander angeordneten Mitnehmern herabfallenden Tücher sich wiederum auf dem Abförderer miteinander verknäueln, ist es vorteilhaft, die einzelnen Dornenkränze in Umfangsrichtung versetzt zueinander anzuordnen. Durch diesen Versatz ist es wiederum möglich, die Taktfrequenz der auf den Abförderer herabfallenden Tücher zu steuern. Der Versatz ermöglicht es zudem, jedem Dornenkranz vorteilhaft einen eigenen Abförderer zuzuordnen. Durch die Zuordnung jeweils eines Abförderers zu einem Dornenkranz ist es möglich, die Umfangsabstände der Dornen innerhalb eines Domenkranzes sehr klein zu halten, wodurch die Leistungsfähigkeit der Einrichtung optimiert wird.

Die Ansprüche 8 bis 15 beinhalten Maßnahmen zur Verbesserung der Betriebssicherheit der Einrichtung. Bezogen auf die Drehposition der Trommel liegen die eingeführten Tücher zunächst in der Sechs-Uhr-Position. Durch die Rotation der Trommel im Uhrzeigersinn werden einzelne Tücher von den dornenartigen Mitnehmern aufgespießt und in die Neun-Uhr-Stellung weitergefördert. Um zu verhindern, daß durch unglückliche Verknäuelungen oder ähnliches doch mehrere Tücher von einem Mitnehmer mitgenommen werden, ist in dieser Neun-Uhr-Stellung eine Abstreif- und Fixierwalze angeordnet. Diese Abstreif- und Fixierwalze rotiert im Gegenuhrzeigersinn, also entgegen der Rotationsrichtung der Trommel. Sie ist mit ihrer Außenmantelfläche direkt neben der Innenfläche der Trommel angeordnet. Durch die gegenläufige Rotation von Trommel und Abstreif- und Fixierwalze werden zum einen die auf die Dornen aufgespießten Tücher zusätzlich auf den Dornen fixiert. Haften doch einmal mehrere Tücher auf einem Dom, bewirkt die Rotationsbewegung der Abstreif- und Fixierwalze, daß die ein Tuch übersteigende Menge von Tüchern von den Dornen wieder abgestreift wird und in die Sechs-Uhr-Stellung zurückfällt.

Die so fixierten Tücher werden von der Neun-Uhr-Stellung in die Zenit-oder Zwölf-Uhr-Stellung der Trommel weitergefördert. In dieser Zwölf-Uhr-Stellung befindet sich eine Abwurfwalze. Sie rotiert ebenso wie die Trommel in Trommeldrehrichtung, also im Uhrzeigersinn, aber mit höherer Umfangsgeschwindigkeit. Durch diese gleichläufige Bewegung zieht die Abwurfwalze die auf den Dornen aufsitzenden Tücher ab, wodurch sie auf unterhalb des Zenits in der Trommel angeordnete Rutschen fallen.

In einer vorteilhaften Ausgestaltung gemäß Anspruch 11 ist die Abstreifwalze als einfache Bürstenwalze ausgestaltet. Die Verwendung einer Bürstenwalze gewährleistet zum einen vorteilhafte Abstreifwirkungen. Zum anderen werden die von den Dornen mitgenommenen Tücher von der Bürstenwalze nochmals durchgebürstet und völlig entfaltet.

Um zu verhindern, daß die auf den Dornen aufgespießten Tücher infolge ihrer Schwerkraft zwischen der Neun-Uhr-Stellung und der Zwölf-Uhr-Stellung wiederum in die Trommel zurückfallen, sind schließlich U-förmige Führungsbleche zwischen der Neun-Uhr-Stellung und der Zenit-Stellung angeordnet. Die offene Seite der U-förmigen Führungsbleche weist hierbei in Richtung auf den Innenmantel der Trommel. Die U-förmigen Führungsbleche bilden somit eine geschlossene Zwangsführung für die an den Mitnehmern adaptierten Tücher.

Es ist vorteilhaft, jedem Dornenkranz eine eigene Abwurfwalze zuzuordnen, wobei die einzelnen Abwurfwalzen auf einer einzigen Welle axial nebeneinander angeordnet sind. Unterhalb jeder Abwurfwalze ist jeweils eine trichterförmig wirksamee Führungsrutsche angeordnet, um die herabfallenden Tücher sicher auf das ihnen zugeordnete Abförderband zu leiten.

Die Ansprüche 16 bis 18 betreffen eine erfinderische Ausgestaltung der Zuführung in die Trommel. Es ist offensichtlich, daß mit einer ansteigenden Anzahl axial nebeneinander angeordneter Dornenkränze auch die axiale Breite der Trommel ansteigt. Das Zuförderband endet jedoch im Bereich der Einfüllstirnseite der Trommel, was dazu führt, daß der der Zuförderstirnseite der Trommel zugewandte Bereich des Trommelinnenraums mit einer größeren Menge von Tüchern beschickt wird als der der Zuförderstirnseite abgewandte Teil des Trommelinnenraums. Zur Vermeidung einer derart ungleichmäßigen Trommelbefüllung in Axialrichtung und daraus resultiernder Unwuchten der rotierenden Trommel ist zwischen dem Sortiergutzuführband und der Trommel ein Einwurfband zwischengeschaltet. Die Antriebsgeschwindigkeit dieses Einwurfbandes ist variabel einstellbar. Durch diese variable Einstellbarkeit ist es möglich, die auf dem Einwurfband geförderten Tücher mit unterschiedlicher Beschleunigung in die Trommel hineinzufördern. Die besonders hochbeschleunigten Tücher werden infolge ihrer höheren Beschleunigung auch in die der Zuförderstirnseite abgewandten Bereiche der Trommel gefördert. Zudem ist es möglich, infolge der variablen Einstellbarkeit der Geschwindigkeit des Einwurfbandes die Einfüllfrequenz der Tücher zu erhöhen.

Die Ansprüche 17 und 18 betreffen eine vorteilhaft einfache Steuerung der Zuführmenge mittels zweier übereinander angeordneter Lichtschranken, die sowohl als Meßeinrichtung als auch als Sollwertgeber wirksam sind.

Die Ansprüche 19 bis 21 betreffen eine erfinderische Weiterbildung der Abförderstrecke. Sie besteht darin, daß die Abförderstrecke in ein Abförderband und ein Endförderband zweigeteilt ist. Das in der Trommel vereinzelte Tuch fällt zunächst aus der Zenit-Stellung auf die zugeordnete Führungsrutsche. Die Führungsrutsche leitet das Tuch an ein darunter angeordnetes Abförderband weiter. Vom Abförderband wird es im Normalfall auf das Endförderband weitergeleitet.

Treten nun Störungen im Bereich des Endförderbandes oder im Bereich der am Ende des Endförderbandes angeordneten Verpackungsstation auf, kann die Laufrichtung des Abförderbandes umgeschaltet werden, so daß die zunächst sortierten Tücher wieder zu einem erneuten Sortiergang in die Trommel zurückfallen.

Dies ist vorteilhaft, weil nach der Erfindung jedem Dornenkranz eine separate Abförderstrecke zugeordnet ist. Bei einer Anzahl von beispielsweise vier Dornenkränzen sind folglich vier Abförderstrecken vorhanden. Kommt es nun auf zwei Abförderstrecken zu Störungen, können die den beiden gestörten Abförderstrecken zugeordneten Tücher infolge der bidirektionalen Umschaltbarkeit des Abförderbandes wieder in die Trommel hineingefördert werden, während der Sortiervorgang auf den beiden noch intakten Abförderstrecken völlig ungestört fortgesetzt wird. Dies hat den Vorteil, daß auch Wartungs- und Servicearbeiten an einzelnen Abförderstrecken hauptzeitparallel durchgeführt werden können, während die parallelen Abförderstrecken ungestört weiterarbeiten können.

In Kombination mit der Füllmengenregelung gemäß den Ansprüchen 17 und 18 ist darüber hinaus sichergestellt, daß die Trommel infolge der beidseitigen Beschickung sowohl durch das rücklaufende Abförderband als auch durch das normallaufende Einwurfband nicht überfüllt wird. Die Regelung sorgt auf einfache Weise dafür, daß das Einwurfband langsamer läuft oder im Extremfall zum Stillstand kommt, wodurch die Einwurffrequenz und damit die Stückzahl der über das Einwurfband eingeworfenen Tücher gesenkt werden.

Gegenstand des Anspruches 21 ist eine Zähleinrichtung im Bereich des Endförderbandes. Diese Zähleinrichtung zählt die mit Hilfe der vorbeschriebenen Vorrichtung vereinzelten Tücher. In Materialflußrichtung hinter der Zähleinrichtung können dann Container oder eine Verpackungsmaschine angeordnet sein, in welche die einzelnen Sortiergutstücke dann "hineingezählt" werden. Auf diese Weise ist es stets möglich, die genaue Anzahl der die Sortiereinrichtung verlassenden Sortiergutstücke zu messen.

Die Ansprüche 22 bis 27 betreffen die Ausschleusstation auf dem Endförderband.

Im Zusammenhang mit der Sortiereinrichtung liegt den Ausschleusstationen folgende Überlegung zugrunde: Putztücher unterliegen während ihres Gebrauchs einem ständigen Verschleiß. Ab dem Unterschreiten einer gewissen Materialmindestdicke und Mindestgewicht ist ein Putztuch verschlissen, was sich meistens auch durch Risse oder Löcher zeigt. Dieser Putztuchverschleiß ist einfach dadurch meßbar, daß das Tuch ein gewisses Mindestgewicht unterschreitet.

Beim vorbekannten manuellen Sortieren wird nicht nur die Stückzahl der auseinandersortierten Tücher ermittelt. Vielmehr wird auch gleich eine Aussortierung der verschlissenen Tücher, also der Schlechtteile, vorgenommen. Bei der Mechanisierung des Sortierens ist es natürlich wünschenswert, die erforderliche Schlechtteilkontrolle gleich mit erledigen zu können. Nach den Ansprüchen 22 ff ist hierfür eine sensorgesteuerte Ausschleusstation vorgesehen. Bei der vorbeschriebenen Schlechtteilkontrolle besteht der Steuerungssensor für die Auslösung der Ausschleusstation aus einer einfachen Waage. Die Waage ist im Bereich des Endförderbandes montiert. Fährt ein Tuch auf dem Endförderband über die Waage, dessen eingestelltes Mindestgewicht unterschritten ist, wird die Ausschleusstation aktiviert. Das schadhafte Tuch wird mittels der Ausschleusstation vom Endsortierband genommen und in ein Silo für Ausschußtücher weitergeleitet. Da die Ausschleusstation vor der Zähleinrichtung liegt, wird auch das Zählergebnis durch das Schlechtteil nicht verfälscht.

Die Ausschleusstation besteht aus einer Düse, die quer zur Laufrichtung des Förderbandes ein Fluid in Richtung auf das Förderband abgibt. Vorzugsweise handelt es sich hierbei um eine Druckluftdüse, welche Druckluft in Richtung auf das Förderband ausbläst. In Förderrichtung etwas versetzt ist auf der der Düse gebenüberliegenden Seite des Förderbandes ein Auffangkorb angeordnet. Das Tuch wird vom Förderband herunter- und in den Auffangkorb hineingeblasen. Der Auffangkorb weist vorteilhafterweise einen offenen Bodenbereich auf, wodurch das vom Förderband geblasene Tuch nach unten in das vorbeschriebene Silo oder auf ein weiteres Förderband fällt. Wichtig für die Funktion der Ausschleusstation sind durchbrochene Seitenwände des Auffangkorbes. Wird ein Auffangkorb ohne durchbrochene Seitenwand verwendet, könnte die Druckluft nämlich an den geschlossenen Wänden des Auffangkorbes reflektiert werden, wodurch das Tuch auf das Förderband zurückfallen kann. Dieses unerwünschte Zurückfallen ist mit Hilfe der als Lochblech ausgestalteten, durchbrochenen Seitenwände des Auffangkorbs wirksam verhindert.

Zur Steigerung der Wirksamkeit der Ausschleusstation ist es möglich, mehrere Düsen nebeneinander anzuordnen. In Anspruch 27 ist ein weiterer Anwendungsfall für eine Ausschleusstation angesprochen. Bei den gewaschenen Putztüchern ist es grundsätzlich unerwünscht, daß metallische Rückstände in ihnen zurückbleiben. Zur Aussortierung derartig metallisierter Putztücher ist neben der vorbeschriebenen Waage noch ein Metalldetektor mit einer anschließenden Ausschleusstation vorgesehen. Überfährt ein einen Metallsplitter beinhaltendes Tuch den Metalldetektor, wird das Tuch ebenso wie bei der Wiegeeinrichtung mit Hilfe von Druckluft ausgeschleust und fällt durch den Auffangkorb auf ein separates Förderband. Dieses separate Förderband fördert das Tuch an eine manuelle Nachbearbeitungsstation. Das Tuch kann dort auf Metallreste und ähnliches untersucht werden.

Anhand der Zeichnungsfiguren wird ein Ausführungsbeispiel einer Sortiereinrichtung beschrieben. Es zeigen:
- Fig. 1: eine Stirnseitenansicht der Sortiereinrichtung in Achsrichtung der Rotationstrommel,
- Fig.2a: eine Einzel-Frontansicht der Trommel in der Blickrichtung gemäß Fig. 1,
- Fig.2b: eine Seitenansicht in Pfeilrichtung II b von Fig. 2a,
- Fig.3a: eine Seitenansicht der Sortiereinrichtung gemäß Blickrichtungspfeil III a in Fig. 1,
- Fig.3b: eine Draufsicht gemäß Pfeil III b in Fig. 3a,
- Fig. 4: eine Prinzipskizze des gesamten Anlagen-Layouts der Sortiereinrichtung mit Zufördereinrichtung und Abförderstrecke in Draufsicht.

Die Sortiereinrichtung enthält eine im Maschinengehäuse 1 in Trommeldrehrichtung 2 (Uhrzeigersinn) drehbar gelagerte Trommel 3. Die Trommel 3 ist zylinderförmig und um ihre Zylindermittellängsachse 4 drehbar. Sie besteht aus der Zylindermantelfläche 5 mit der Zuförderstirnseite 6 und der ihr in Trommelachsrichtung 7 abgewandten Abförderstirnseite 8. Auf dem Innenmantel 9 sind mit gleichem Umfangsabstand 10 als Mitnehmer 11 wirksame hakenartige Dorne angeordnet.

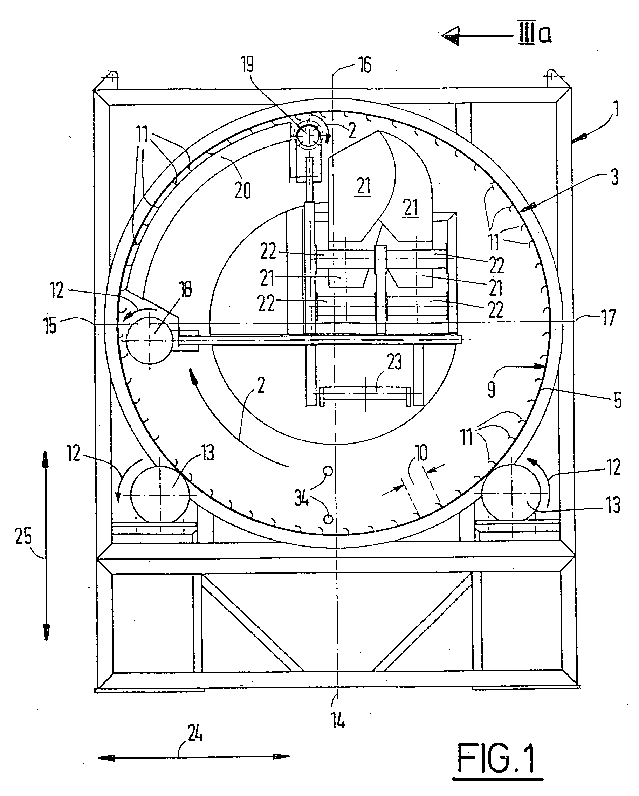

Des weiteren sind in Fig. 1 die im Gegenuhrzeigersinn 12, also gegen die Trommeldrehrichtung 2 rotierenden Antriebswellen 13 für den Drehantrieb der Trommel 3 dargestellt. Dort ist weiterhin mit der Positionsziffer 14 die Sechs-Uhr-Stellung der Trommel 3 bezeichnet - bezogen auf das Maschinengehäuse 1 in Blickrichtung der Zylinder-Mittellängsachse 4. Analog dazu tragen die Neun-Uhr-Stellung die Positionsziffer 15, die Zwölf-Uhr-Stellung die Positionsziffer 16 und schließlich die Drei-Uhr-Stellung die Positionsziffer 17.

In der Neun-Uhr-Stellung 15 ist eine Bürstenwalze 18 angeordnet. Sie dreht im Gegenuhrzeigersinn 12 gegen die Trommeldrehrichtung 2. In der Zenit- oder Zwölf-Uhr-Stellung 16 ist eine Abwurfwalze 19 angeordnet. Sie rotiert in Trommeldrehrichtung 2, also im Uhrzeigersinn, jedoch mit deutlich höherer Drehgeschwindigkeit als die Trommel 3. Im Trommel-Sektor zwischen der Neun-Uhr-Stellung 15 und der Zenit-Stellung 16 ist das im Querschnitt U-förmige Führungsblech 20 angeordnet. Die Offenseite des U-Querschnitts des Führungsblechs 20 ist dem Innenmantel zugewandt. Das Führungsblech 20 ist in Umfangsrichtung der Trommel derart kreissektorartig geformt, daß es den Innenkonturen des Innenmantels 9 zwischen der Neun-Uhr-Stellung 15 und der Zwölf-Uhr Stellung 19 folgt.

In Fig. 1 weiter erkennbar sind die Führungsrutschen 21 und die ihnen jeweils zugeordneten Abförderbänder 22. Schließlich ist das zur Beschickung der Trommel 3 dienende Einwurfband 23 dargestellt. Die Rotationsebene der Trommel 3 verläuft in einer Vertikalebene, die von der Querachsrichtung 24 und der zur Querachsrichtung 24 senkrecht verlaufenden Maschinenaufbaurichtung 25 aufgespannt ist.

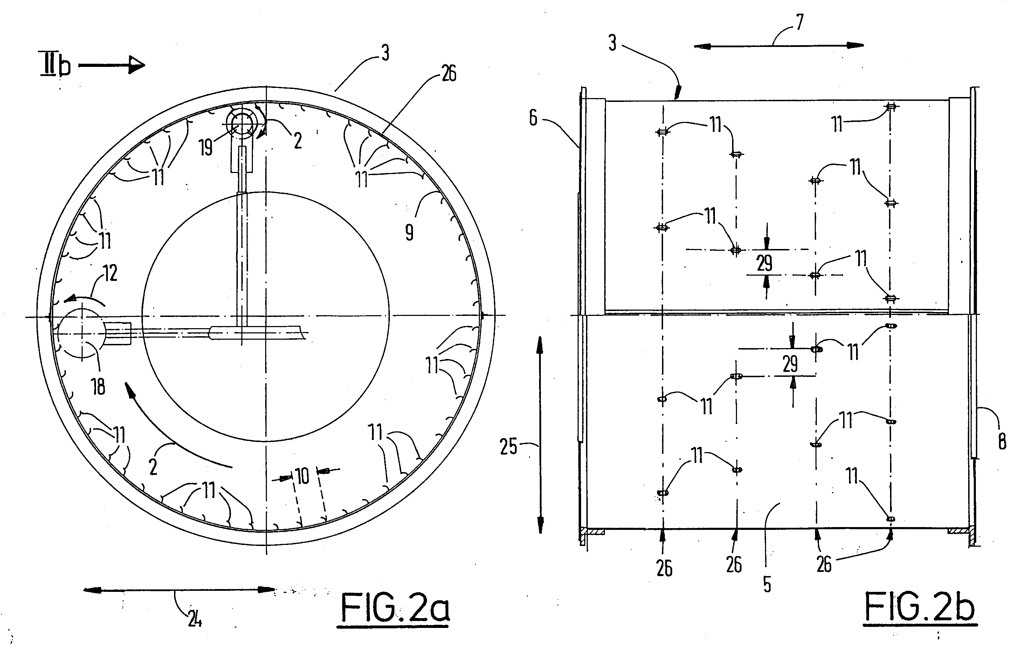

Die (Fig. 2) radial nebeneinander mit Umfangsabstand 10 angeordneten Dornen 11 liegen auf einer Kreislinie zur Trommelachsrichtung 7 und bilden einen Dornenkranz 26. In Fig. 2b sind mehrere in Richtung der Trommelachse 4 axial nebeneinander angeordnete Dornenkränze 26 sichtbar. Die Trommel 3 weist insgesamt vier nebeneinander angeordnete Dornenkränze 26 auf. Sowohl die den äußeren linken Dornenkranz 26 als auch die den äußeren rechten Dornenkranz 26 bildenden Dornen 11 sind mittels Hilfslinien 27 und 28 der besseren Deutlichkeit halber graphisch miteinander verbunden. Dort ist ferner der Umfangsversatz 29 zweier benachbarter Dornenkränze 26 sichtbar. Der Versatz 29 der einander benachbarten Dornenkränze 26 zueinander in Umfangsrichtung ist stets gleichbleibend.

In den Zeichnungen nicht dargestellt ist, daß bei dem Ausführungsbeispiel analog zur Anzahl der vier Domenkränze 26 ebenfalls vier Abwurfwalzen 19 vorhanden sind. Die die Abwurfwalzen 19 tragende Welle ist hierbei zur Trommelachse 4 leicht schräg eingebaut. Auf diese Weise wird der Umfangsversatz 29 der einzelnen Dornenkränze 26 in der Weise ausgenutzt, daß die jeweiligen Zenit-Stellungen 16 der einzelnen Dornenkränze 26 bezogen auf das Maschinengehäuse 1 geringfügig voneinander abweichen. Auf diese Weise ist es möglich, die Putztücher an unterschiedlichen Stellen aus den Dornen 11 auszuklinken und unterschiedlichen Abförderbändern 22 zuzuführen.

Ebenso ist jedoch denkbar, die die Abwurfwalzen 19 tragende Welle parallel zur Trommelachse 4 auszurichten und die Abförderung der Tücher auf verschiedenen Abförderbändern 22 mittels einer zueinander versetzten Anordnung bzw. durch die Verwendung verschieden langer Abförderbänder 22 zu realisieren.

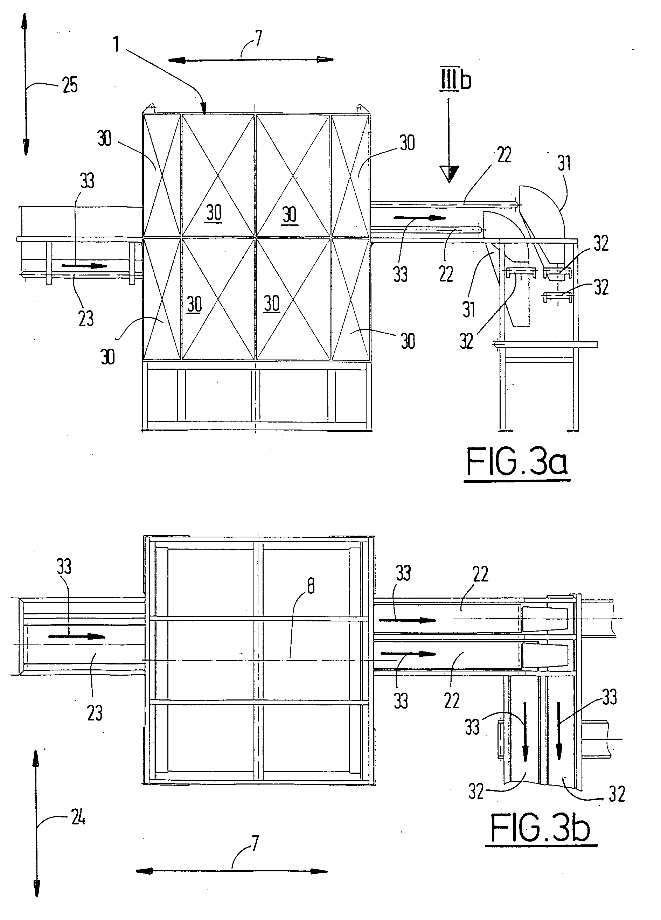

In Fig. 3 ist die mit Plattenelementen 30 verkleidete Seitenwand des Maschinengehäuses 1 dargestellt. Ferner sind dargestellt das Einwurfband 23 sowie die Abförderbänder 22. Die Abförderbänder 22 leiten die sortierten Tücher über die Trichterrutschen 31 auf die Endförderbänder 32. Die Hauptmaterialflußrichtung, die gleichzeitig Förderrichtung ist, ist durch den Förderrichtungspfeil 33 in Fig. 3 dargestellt.

Aus der Darstellung insbesondere der Fig. 3b in Verbindung mit Fig. 1 ist erkennbar, daß jedem der vier Domenkränze 26 ein separates Abförderband 22 zugeordnet ist. Dementsprechend sind auch vier separate Führungsrutschen 21 vorhanden, die jeweils einem Domenkranz 26 und dem jeweils zugeordneten Abförderband 22 zugeordnet sind. Die Abförderbänder 22 laufen übereinander gewissermaßen in "zwei Stockwerken". Es laufen also stets zwei Abförderbänder 22 parallel zueinander. Die stockwerkartige Anordnung der Abförderbänder 22 ist ebenfalls im rechten Teil der Fig. 3a deutlich erkennbar.

In Fig. 1 sind schließlich die als Meßelemente und Sollwertgeber für den Füllstand der Trommel 3 wirksamen Lichtschranken 34 eingezeichnet. Die in Maschinenaufbaurichtung 25 untere Lichtschranke 34 dient hierbei als Meßeinrichtung und Sollwertgeber für den Minimal-Füllstand. Die in Fig. 1 oberhalb der unteren Lichtschranke 34 angeordnete, dem Zentrum der Trommel 3 zugewandte Lichtschranke 34 dient als Meßinstrument und Sollwertgeber für den Füllungshöchststand.

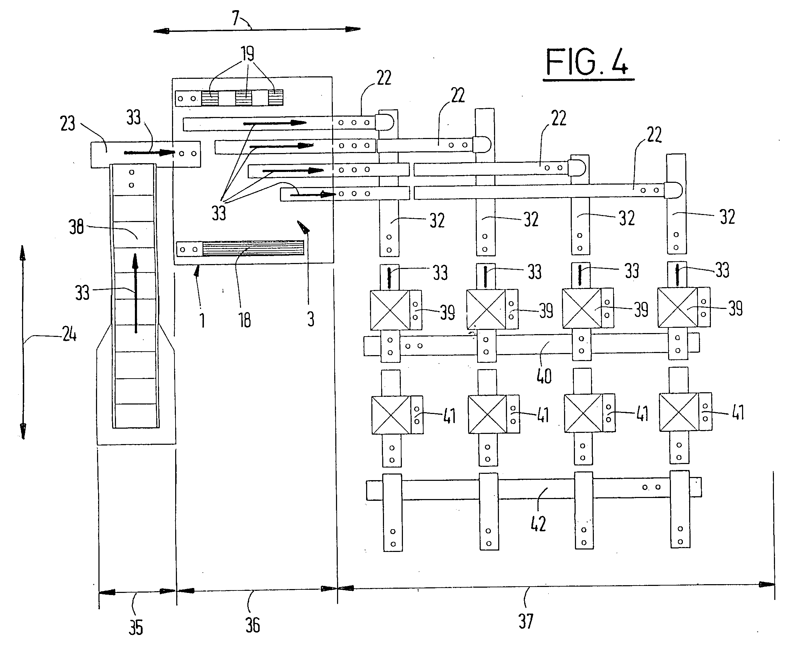

Anhand des in Fig. 4 dargestellten Anlagenlayouts wird die Funktionsweise der gesamten Anlage beschrieben, wobei wiederum der Förderrichtungspfeil 33 die jeweilige Materialflußrichtung angibt.

Fig. 4 zeigt in ihrem linken Teil den Zuführbereich 35 der Anlage, in ihrer Mitte den Sortierbereich 36 und schließlich im rechten Teil den Abförderbereich 37. Der Zuführbereich 35 besteht im wesentlichen aus dem in Querachsrichtung 24 verlaufenden Zuführband 38 und dem sich daran anschließenden, in Trommelachsrichtung 7 verlaufenden Einwurfband 23. Das Zuführband 38 führt die Tücher dem Einwurfband 23 mit kontinuierlicher Geschwindigkeit zu. Wird durch die Lichtschranke 34 in der Trommel 3 angezeigt, daß der Füllungsmaximalstand erreicht bzw. überschritten ist, stoppt das Zuführband 38 automatisch.

Das Einwurfband 23 weist eine variabel einstellbare Antriebsgeschwindigkeit auf. Auf diese Weise ist es möglich, das Sortiergut verschieden stark zu beschleunigen. Durch die verschieden starke Beschleunigung fällt das Sortiergut wiederum in Achsrichtung 7 gesehen verschiedene Bereiche der Trommel 3. Mittels der Geschwindigkeitsregulierung des Einwurfbandes 23 ist also eine statistische Verteilung der Tücher über die gesamte Trommelbreite in Trommelachsrichtung 7 möglich.

Im Sortierbereich 36 werden von jedem Dorn 11 jeweils ein oder auch mehrere Tücher mitgenommen. Die Trommel 3 rotiert in Trommeldrehrichtung 2. Bei Erreichen der Neun-Uhr-Stellung 15 geraten die auf den Dornen 11 mitgenommenen Tücher in den Wirkungsbereich der im Gegenuhrzeigersinn 12 rotierenden Bürstenwalze 18. Die Bürstenwalze 18 fixiert einerseits jeweils ein Tuch auf jeweils einem Dorn 11 und streift die überzähligen Tücher ab und wirbelt sie zurück in den Bereich der Trommel 3, welcher sich etwa in der Sechs-Uhr-Stellung 14 befindet. Die auf den Dornen 11 fixierten Tücher werden, vom Führungsblech 20 geführt, in die Zwölf-Uhr-Stellung 16 verfahren und geraten in den Eingriffsbereich der in Trommeldrehrichtung 2 rotierenden Abwurfwalzen 19. Die Abwurfwalzen 19 rotieren in Trommeldrehrichtung 2 mit sehr viel höherer Rotationsgeschwindigkeit als die Trommel 3. Aufgrund dieses Geschwindigkeitsunterschieds werden die Tücher gewissermaßen von den Domen 11 abgezogen und in die dem jeweiligen Dornenkranz 26 zugeordnete Führungsrutsche 21 hineingewirbelt. Über die Führungsrutschen 21 fallen die Tücher dann auf das dem jeweiligen Dornenkranz 26 und der jeweiligen Führungsrutsche 21 zugeordnete Abförderband 22. Mit dem Auftreffen auf das Abförderband 22 gelangen die Tücher in den auch als Abförderstrecke bezeichneten Abförderbereich 37 der Sortiereinrichtung. Treten im Abförderbereich 37 keine Störungen auf, fördern die Abförderbänder 22 die Tücher in der Hauptförderrichtung weiter auf die Endförderbänder 32. Die Haupfförderrichtung entspricht hierbei wiederum der durch den Förderrichtungspfeil 33 gekennzeichneten Materialflußhauptrichtung.

Treten jedoch auf einem oder mehreren der Endförderbänder 32 Störungen auf, wird die Laufrichtung der den gestörten Endförderbändern 32 zugeordneten Abförderbänder 22 umgeschaltet. Das umgeschaltete Abförderband 22 läuft dann entgegen der durch den Förderrichtungspfeil 33 dargestellten Materialflußhauptrichtung. In diesem Fall wird das bereits aussortierte Tuch in die Trommel 3 zurückgeführt und die beschriebene Prozedur im Materialsortierbereich 36 wiederholt sich hinsichtlich dieses Tuchs. Mit Hilfe dieser bidirektionalen Umschaltbarkeit der Abförderbänder 22 ist es möglich, den Sortiervorgang auf den intakten Endförderbändern 32 fortzusetzen, während an den nicht intakten Endförderbändern 32 Wartungs- oder Reparaturarbeiten durchgeführt werden können.

Läuft das jeweilige Abförderband 22 in Richtung des Förderrichtungspfeils 33, fällt das Tuch schließlich auf das zugeordnete Endförderband 32. Die Endförderbänder 32 laufen analog dem Zuführband 38 in Querachsrichtung 24, während das Einwurfband 23 und die Abförderbänder 22 in Trommelachsrichtung 7 verlaufen.

Die auf eines der Endförderbänder 32 geförderten Tücher durchlaufen zunächst den dem jeweiligen Endförderband 32 zugeordneten Metalldetektor 39. Meldet der Metalldetektor 39 einen Metallanteil im jeweiligen Tuch, wird es in Trommelachsrichtung 7 mit Druckluft aus in Fig. 4 nicht dargestellten Druckluftdüsen beaufschlagt und so in einen aus Lochblechen gebildeten Auffangkorb mit durchbrochenen Wänden auf der den Düsen gegenüberliegenden Seite des Endförderbands 32 hineingeblasen. Die Auffangkörbe sind in Fig. 4 ebenfalls nicht dargestellt. Da die Bodenbereiche der Auffangkörbe offen sind, fallen die ausgeschleusten Tücher auf das Ausschleusband 40 und werden in einen in Fig. 4 nicht dargestellten Sonderkontrollbereich gefördert.

Die vom Metalldetektor 39 nicht beanstandeten Tücher durchlaufen weiterhin in der durch den Förderrichtungspfeil 33 angedeuteten Materialflußhauptrichtung die Wiegestation 41. Sämtliche Putztücher, die leichter als etwa 30 Gramm sind, werden auf die vorbeschriebene Art mit Druckluft auf das Ausschußband 42 ausgeschleust, weil es sich hier um unbrauchbare Ausschußtücher handelt. Auch werden sämtliche Tücher ausgeschleust, die schwerer als 60 Gramm sind. Da das Tuchneugewicht bei etwa 50 Gramm liegt, ist auch hier eine Störung zu vermuten. Zur Aufrechterhaltung eines störungsfreien Laufs der mechanisierten Sortiereinrichtung werden auch diese Tücher über das Ausschußband 42 ausgeschleust. Sämtliche nicht ausgeschleusten Tücher durchlaufen schließlich eine in Fig. 4 nicht dargestellte Zähleinrichtung, um schließlich verpackt zu werden.

### Bezugszeichenliste

- 1.: Maschinengehäuse
- 2.: Trommeldrehrichtung
- 3.: Trommel
- 4.: Trommelachse
- 5.: Zylindermantel
- 6.: Zuförderstirnseite
- 7.: Trommellachsrichtung
- 8.: Abförderstirnseite
- 9.: Innenmantel
- 10.: Umfangsabstandabstand
- 11.: Dorn
- 12.: Gegenuhrzeigersinn
- 13.: Antriebswelle
- 14.: Sechs-Uhr-Stellung
- 15.: Neun-Uhr-Stellung
- 16.: wölf-Uhr-Stellung /Zenit
- 17.: Drei-Uhr-Stellung
- 18.: Bürstenwalze
- 19.: Abwurfwalze
- 20.: Führungsblech
- 21.: Führungsrutsche
- 22.: Abförderband
- 23.: Einwurfband
- 24.: Querachsrichtung
- 25.: Maschinenaufbaurichtung
- 26.: Dornenkranz
- 27.: Hilfslinie
- 28.: Hilfslinie
- 29.: Radialversatz
- 30.: Plattenelement
- 31.: Trichterrutsche
- 32.: Endförderband
- 33.: Förderrichtungspfeil
- 34.: Lichtschranke
- 35.: Zuführbereich
- 36.: Sortierbereich
- 37.: Abförderbereich
- 38.: Zuführband
- 39.: Metalldetektor
- 40.: Ausschleusband
- 41.: Wiegestation
- 42.: Ausschußband

## Patentansprüche

1. Sortiereinrichtung für Textilien, insbesondere für Putztücher - nachstehend kurz "Tücher" -, mit einer in einer vertikalen Rotationsebene endlos umlaufend angetriebenen Vereinzelungsvorrichtung und über deren Umfang verteilt angeordneten Mitnehmern (11),
- von denen jeweils einer aus einem Haufwerk mindestens ein Tuch herausgreift und dieses in vereinzelter Form an anderer Stelle abgibt,
- wobei die Vereinzelungsvorrichtung eine Rotationstrommel (3) mit an ihrem Innenmantel (9) angeordneten Mitnehmern (11) ist dadurch gekennzeichnet, daß die Rotationstrommel (3) eine mit ihrer Außenmantelfläche direkt neben der Innenmantelfläche (9) der Rotationstrommel (3) angeordnete, entgegen der Trommeldrehrichtung (2) rotierende Abstreif- und Fixierwalze (18) umfaßt und
- daß die Zuführung der Tücher und deren vereinzelte Abführung im wesentlichen horizontal und in Trommelachsrichtung durch eine Trommelstirnseite (6,8) erfolgen.

2. Einrichtung nach Anspruch 1,
dadurch gekennzeichnet,
daß die Zu- und Abführung in unterschiedlichem Höhenniveau der Rotationsebene der Trommel (3) erfolgen.

3. Einrichtung nach Anspruch 1 oder 2,
dadurch gekennzeichnet,
daß die Zu- und Abführung gleichgerichtet durch unterschiedliche Trommelstirnseiten (6,8) erfolgt.

4. Einrichtung nach Anspruch 1,
dadurch gekennzeichnet,
daß die Mitnehmer (11) in Rotationsrichtung (2) der Trommel (3) eingebogene, hakenartige Dorne (11) sind.

5. Einrichtung nach einem der Ansprüche 1 bis 4,
dadurch gekennzeichnet,
daß mehrere Mitnehmer (11) in etwa einer Rotationsebene vorzugsweise in gleichen Umfangsabständen (10) angeordnet sind und einen Dornenkranz (26) bilden.

6. Einrichtung nach Anspruch 5,
dadurch gekennzeichnet,
daß mehrere Dornenkränze (26) in Axialrichtung nebeneinander am Innenmantel (9) der Trommel (3) angeordnet sind.

7. Einrichtung nach Anspruch 6,
gekennzeichnet durch
einen in Umfangsrichtung der Trommel (3) wirksamen Versatz von axial nebeneinander angeordneten Dornenkränzen (26).

8. Einrichtung nach einem oder mehreren der vorhergehendne Ansprüche,
dadurch gekennzeichnet,
daß in der Trommel (3) mindestens eine in Trommeldrehrichtung (2) drehantreibbare Abwurfwalze (19) zum Ausklinken der Tücher aus den Mitnehmern (11) angeordnet ist.

9. Einrichtung nach Anspruch 8,
dadurch gekennzeichnet,
- daß die Rotationsachsen der Abstreif- und Fixierwalze (18) und der Abwurfwalze (19) parallel zur Trommelachse (4) verlaufen und
- daß die Walzen (18,19) vorzugsweise mit spaltförmig geringem Abstand mit ihren Umfangsflächen den Innenmantel (9) der Trommel (3) beaufschlagen.

10. Einrichtung nach Anspruch 9,
dadurch gekennzeichnet,
daß die Abstreif- und Fixierwalze (18) eine Bürstenwalze mit etwa radial in Richtung auf den Innenmantel (9) der Trommel (3) vorstehenden Borsten ist.

11. Einrichtung nach einem oder mehreren der vorhergehenden Ansprüche,
dadurch gekennzeichnet,
daß die Abstreif- und Fixierwalze (18) etwa in Höhe der Trommelachse (4) dem aufsteigend rotierenden Teil des Innenmantels (9) zugeordnet ist.

12. Einrichtung nach einem der Ansprüche 8 bis 10,
dadurch gekennzeichnet,
daß die Abwurfwalze (19) mit höherer Rotationsgeschwindigkeit dreht als die Trommel (3) und im Bereich des Zenits (16) des Rotationsweges der Trommel (3) angeordnet ist.

13. Einrichtung nach einem oder mehreren der vorhergehenden Ansprüche,
gekennzeichnet durch
ein Führungsblech (20) im Umfangsbereich zwischen einer Abstreif- und Fixierwalze (18) und einer Abwurfwalze (19) des Innenmantels (9), welches im Querschnitt U-förmig ausgestaltet und zur Führung von an den Mitnehmern (11) herunterhängenden Tüchern bestimmt ist.

14. Einrichtung nach einem oder mehreren der vorhergehenden Ansprüche,
dadurch gekennzeichnet,
- daß jedem Mitnehmerkranz (26) bzw. jeder Abwurfwalze (19) jeweils eine Führungsrutsche (21) zum Abtransport der Tücher auf ein Abförderband (22) zugeordnet ist und
- daß die Abförderbänder nebeneinander und/oder übereinander durch die Abförderstirnseite (8) der Trommel (3) hindurchgeführt sind.

15. Einrichtung nach einem oder mehreren der vorhergehenden Ansprüche,
gekennzeichnet durch
ein als Einwurfband (23) wirksames Zuförderband zur Befüllung der Trommel (3) und eine Variabilität von deren Antriebsgeschwindigkeit zur unterschiedlichen Beschleunigung der in die Trommel (3) zu füllenden Tücher.

16. Einrichtung nach einem oder mehreren der vorhergehenden Ansprüche,
dadurch gekennzeichnet,
daß in der Trommel (3) eine Meßeinrichtung (34) zur Messung der Füllmenge und ein Sollwertgeber (34) zur Regelung der Füllmenge mit Tüchern angeordnet sind.

17. Einrichtung nach Anspruch 16,
dadurch gekennzeichnet,
- daß die Meßeinrichtung und der Sollwertgeber gemeinsam von einer Lichtschranke (34) gebildet sind und
- daß zwei Lichtschranken bezogen auf die Rotationsstellung der Trommel (3) in Sechs-Uhr-Stellung (14) übereinanderliegend angeordnet sind derart, daß
-- die untere Lichtschranke (34) als Sollwertgeber für die Tuch-Minimalmenge
und
-- die obere Lichtschranke (34) als Sollwertgeber für die Tuch-Maximalmenge zur Regelung des Einwurfbandes (23) wirksam sind.

18. Einrichtung nach Anspruch 14,
dadurch gekennzeichnet,
daß jede Führungsrutsche (21) auf eine in Laufrichtung zweigeteilte Abförderstrecke (37) mündet derart,
- daß der sich an die Führungsrutsche (21) in Förderrichtung (33) anschließende Bereich der Abförderstrecke (37) von einem Abförderband (22) gebildet ist und
- daß sich an das Abförderband (22) ein Endförderband (32) anschließt.

19. Einrichtung nach Anspruch 18,
dadurch gekennzeichnet,
daß das Abförderband (22) bidirektional antreibbar ist zur Förderung der einzelnen Tücher einerseits auf das Endförderband (32) oder andererseits zurück in die Trommel (3).

20. Einrichtung nach einem der Ansprüche 18 oder 19,
gekennzeichnet durch
eine Zähleinrichtung der Tücher auf dem Endförderband (32).

21. Einrichtung nach Anspruch 20,
gekennzeichnet durch
mindestens eine sensorgesteuerte Ausschleusstation für Tücher vom Endförderband (32).

22. Einrichtung nach Anspruch 21,
gekennzeichnet durch
- mindestens eine seitlich am Förderband (32) positionierte Düse zum Ausblasen eines Fluids mit Überdruck quer zur Förderrichtung und
- an der der Düse gegenüberliegenden Seite des Förderbandes (32) in deren Förderrichtung gegenüber der Düse etwas versetzt angeordnet einen Auffangkorb zum Auffangen der ausgeschleusten Tücher.

23. Einrichtung nach Anspruch 22,
gekennzeichnet durch
Druckluft als Fluid.

24. Einrichtung nach Anspruch 23,
dadurch gekennzeichnet,
daß der Auffangkorb einen offenen Boden zum Durchfallen des Ausschleusgutes auf ein unterhalb des Auffangkorbes angeordnetes Ausschleusband (40) aufweist.

25. Einrichtung nach einem der Ansprüche 22 oder 23,
gekennzeichnet durch
eine gewichtsgesteuerte Auslösung der Ausschleusstation.

26. Einrichtung nach einem der vorhergehenden Ansprüche,
gekennzeichnet durch
einen Metalldetektor (39) als Sensor zum Auslösen der Ausschleusstation.

## Claims

1. A sorting device for textile materials, in particular for cleaning cloths - abbreviated to "cloths" below -, with a device for separating them into individual cloths continuously driven in rotation in a vertical plane of rotation, and with dogs (11) distributed over its circumference,
- whereof each dog extracts each time at least one cloth out of a loose pile and delivers it individually at a different point,
- wherein the separating-out device is a rotary drum (3) with dogs (11) arranged on its internal shell (9),
characterized in that the rotary drum (3) comprises a casting-off and fixing roller (18) arranged with its outer shell surface directly next to the internal shell surface (9) of the rotary drum (3), rotating against the direction of rotation (2) of the drum, and
- that the feeding of the cloths and their individual removal are effected substantially horizontally and in the axial direction of the drum through an end face (6, 8) of the drum.

2. A device according to claim 1
characterized in that
the feeding and removal are effected at different levels of height of the plane of rotation of the drum (3).

3. A device according to claim 1 or 2,
characterized in that
the feeding and removal are effected in the same direction through different end faces (6, 8) of the drum.

4. A device according to claim 1,
characterized in that
the dogs (11) are hook-type pins (11) bent in the direction of rotation (2) of the drum (3).

5. A device according to one of claims 1 to 4,
characterized in that
several dogs (11) are arranged approximately in one plane of rotation, preferably at the same circumferential interspacings (10) and form a pin ring (26).

6. A device according to claim 5,
characterized in that
several pin rings (26) are arranged next to one another in the axial direction on the internal shell (9) of the drum (3).

7. A device according to claim 6,
characterized by
an offset of pin rings (26) arranged next to one another, which is effective in the circumferential direction of the drum (3).

8. A device according to one or more of the preceding claims,
characterized in that
in the drum (3) there is arranged at least one releasing roller (19) drivable in rotation in the direction of rotation (2) of the drum, for releasing the cloths from the dogs (11).

9. A device according to claim 8,
characterized in that
- the axes of rotation of the casting-off and fixing roller (18) and of the releasing roller (19) extend parallel to the drum axis (4), and
- that the rollers (18, 19) act with their circumferential surfaces on the internal shell (9) of the drum (3), preferably with a small interspacing in the form of a gap.

10. A device according to claim 9,
characterized in that
the casting-off and fixing roller (18) is a brush roller with bristles projecting approximately radially in the direction towards the internal shell (9) of the drum (3).

11. A device according to one or more of the preceding claims,
characterized in that
the casting-off and fixing roller (18) is assigned to the upwardly rotating portion of the internal shell (9), approximately at the level of the drum axis (4).

12. A device according to one of claims 8 to 10,
characterized in that
the releasing roller (19) rotates at a higher speed of rotation than the drum (3) and is arranged in the zone of the zenith (16) of the rotational path of the drum (3).

13. A device according to one or more of the preceding claims,
characterized by
a guide plate (20) in the circumferential zone between a casting-off and fixing roller (18) and releasing roller (19) of the internal shell (9), which plate is designed with a U-shape in cross-section and is intended for guiding the cloths hanging down from the dogs (11).

14. A device according to one or more of the preceding claims,
characterized in that
- one guide chute (21) is in each case assigned to each ring (26) of dogs or each releasing roller (19), for removing the cloths onto a removing belt (22), and
- that the removing belts are carried next to one another and/or above one another through the removal end face (8) of the drum (3).

15. A device according to one or more of the preceding claims,
characterized by
a feeder belt acting as a loading belt (23) for filling the drum (3); and by scope for varying its driven speed for a variable acceleration of the cloths to be fed into the drum (3).

16. A device according to one or more of the preceding claims,
characterized in that
in the drum (3) there are arranged a measuring device (34) for measuring the quantity of the fill and a desired value setting means (34) for regulating the quantity of the cloths to be loaded.

17. A device according to claim 16,
characterized in that
- the measuring device and the desired value setting means are formed jointly by a light barrier (34), and
- that two light barriers are arranged on top of one another in relation to the rotational position of the drum (3) in its six-o-clock position (14), in such a way that
-- the lower light barrier (34) acts as a desired value setting means for the minimum quantity of cloths, and
-- the upper light barrier (34) acts as a desired value setting means for the maximum quantity of cloths, for regulating the loading belt (23).

18. A device according to claim 14,
characterized in that
each guide chute (21) leads onto a removal path (37) bisected in the running direction, in such a way that
- the zone of the removal path (37) following the guide chute (21) in the conveyance direction is formed by a removing belt (22), and
- that an end conveyor belt (32) follows the removing belt (22).

19. A device according to claim 18,
characterized in that
the removing belt (22) can be driven in two directions for conveying the individual cloths, on the one hand, onto the end conveyor belt (32) or, on the other hand, back into the drum (3).

20. A device according to one of claims 18 or 19,
characterized by
a device for counting the cloths on the end conveyor belt (32).

21. A device according to claim 20,
characterized by
at least one sensor-controlled station for eliminating cloths from the end conveyor belt (32).

22. A device according to claim 21
characterized by
- at least one nozzle positioned at the side of the end conveyor belt (32) for blasting a fluid at excess pressure transversely to the conveyance direction, and
- a collecting basket on the side of the end conveyor belt (32) on the opposite side to the nozzle, somewhat offset in its conveyance direction relative to the nozzle, for collecting the eliminated cloths.

23. A device according to claim 22,
characterized by
compressed air as the fluid.

24. A device according to claim 22,
characterized in that
the collecting basket has an open bottom for the dropping through of the eliminated stock onto an eliminating belt (40) arranged below the collecting basket.

25. A device according to one of claims 22 or 23,
characterized by
a weight-controlled triggering of the eliminating station.

26. A device according to one of the preceding claims,
characterized by
a metal detector (39) as a sensor for triggering the eliminating station.

## Revendications

1. Dispositif de triage pour textiles, en particulier pour tissus de nettoyage - désignés ci-après brièvement par "tissus"-, avec un dispositif d'individualisation entraîné en circulation continue dans un plan de rotation vertical, et des organes d'entraînement (11), disposés de façon répartie sur sa périphérie,
- dont chaque fois l'un saisit, pour l'extraire d'un tas, au moins un tissus et fournit celui-ci, sous forme individualisée, en un autre emplacement,
- le dispositif d'individualisation étant un tambour de rotation (3), avec des organes d'entraînement (11) disposés sur son enveloppe intérieure (9), caractérisé en ce que le tambour de rotation (3) comprend un rouleau de raclage et de fixation (18), tournant a l'encontre du sens de rotation (2) du tambour, disposé avec sa surface extérieure d'enveloppe directement à côté de la surface intérieure d'enveloppe (9) du tambour de rotation (3), et
- en ce que l'amenée des tissus et leur évacuation individualisée s'effectuent sensiblement horizontalement et dans la direction de l'axe du tambour, à travers une face frontale de tambour (6, 8).

2. Dispositif selon la revendication 1, caractérisé en ce que l'amenée et l'évacuation s'effectuent en un niveau en hauteur différent du plan de rotation du tambour (3).

3. Dispositif selon la revendication 1 ou 2, caractérisé en ce que l'amenée et l'évacuation s'effectuent dans le même sens, à travers des faces frontales (6, 8) différentes du tambour

4. Dispositif selon la revendication 1, caractérisé en ce que les organes d'entraînement (11) sont des épines (11) en forme de crochets, repliées dans la direction de rotation (2) du tambour (3).

5. Dispositif selon l'une des revendications 1 à 4, caractérisé en ce que plusieurs organes d'entraînement (11) sont disposés à peu près dans un même plan de rotation, de préférence suivant des espacements périphériques (10) identiques et constituent une couronne d'épines (26).

6. Dispositif selon la revendication 5, caractérisé en ce que plusieurs couronnes d'épines (26) sont disposées les unes à côté des autres en direction axiale, sur l'enveloppe intérieure (9) du tambour (3).

7. Dispositif selon la revendication 6, caractérisé par un décalage, agissant dans la direction périphérique du tambour (3), entre les couronnes d'épines (26) disposées axialement les unes à côté des autres.

8. Dispositif selon l'une ou plusieurs des revendications précédentes, caractérisé en ce que dans le tambour (3) est disposé au moins un rouleau éjecteur (19) susceptible d'être entraîné en rotation dans le sens de rotation (2) du tambour, dans le but de détacher les tissus vis-à-vis des organes d'entraînement (11).

9. Dispositif selon la revendication 8, caractérisé en ce que
- les axes de rotation du rouleau de raclage et de fixation (18) et du rouleau éjecteur (19) s'étendent parallèlement à l'axe de tambour (4), et
- en ce que les rouleaux (18, 19) sollicitent de préférence avec un faible espacement en forme d'intervalle, par leur face périphérique, l'enveloppe intérieure (9) du tambour (3).

10. Dispositif selon la revendication 9, caractérisé en ce que le rouleau de raclage et de fixation (18) est un rouleau à soies ayant des soies, faisant saillie à peu près radialement dans la direction de l'enveloppe intérieure (9) du tambour (3).

11. Dispositif selon l'une ou plusieurs des revendications précédentes, caractérisé en ce que rouleau de raclage et de fixation (18) est associé à la partie tournante montante de l'enveloppe intérieure, a peu près au niveau de l'axe de tambour (4).

12. Dispositif selon l'une des revendications 8 à 10, caractérisé en ce que le rouleau éjecteur (19) tourne avec une vitesse de rotation supérieure à celle du tambour (3) et est disposé dans la zone du zénith (16) de la course de rotation du tambour (3).

13. Dispositif selon l'une ou plusieurs des revendications précédentes, caractérisé par une tôle de guidage (20), dans la zone périphérique entre un rouleau de raclage et de fixation (18) et un rouleau éjecteur (19) de l'enveloppe intérieure (9), équipé avec une section transversale en forme de U et conçu pour assurer le guidage de tissus pendants aux organes d'entraînement (11).

14. Dispositif selon l'une ou plusieurs des revendications précédentes caractérisé,
- en ce qu'à chaque couronne d'organes d'entraînement (26), respectivement chaque rouleau éjecteur (19) est associée une goulotte de guidage (21) destinée au transport d'évacuation des tissus sur une bande de transport d'évacuation (22), et
- en ce que les bandes de transport d'évacuation sont guidées les unes à côté des autres et/ou les unes au-dessus les autres, à travers la face frontale de transport d'évacuation (8) du tambour (9).

15. Dispositif selon l'une ou plusieurs des revendications précédentes, caractérisé par une bande d'amenée, agissant comme bande d'introduction (23), pour remplir le tambour (3) et par une variabilité de sa vitesse d'entraînement, dans le but de produire une accélération de valeur différente des tissus dont on doit remplir le tambour (3).

16. Dispositif selon l'une ou plusieurs des revendications précédentes, caractérisé en ce que, dans le tambour (3) sont disposés un dispositif de mesure (34), pour mesurer la quantité de remplissage, et un capteur de valeur de consigne (34), pour assurer la régulation de la quantité de remplissage en tissus.

17. Dispositif selon la revendication 16, caractérisé en ce que,
- le dispositif de mesure et le capteur de valeur de consigne sont constitués conjointement par une cellule photoélectrique (34), et
- en ce que deux cellules photoélectriques, en se référant à la position en rotation du tambour (3) dans la position à 6 heures (14) sont disposées l'une au-dessus de l'autre, de manière que
-- la cellule photoélectrique inférieure (34) agisse comme capteur de valeur de consigne pour la quantité minimale de tissus, et
-- la cellule photoélectrique supérieure (34) agisse comme capteur de valeur de consigne pour la quantité maximale de tissus, dans le but de réguler la bande d'introduction (23).

18. Dispositif selon la revendication 14, caractérisé en ce que chaque goulotte de guidage (21) débouche sur un tracé de transport d'évacuation (37), divisé en deux parties dans la direction de déplacement, de manière
-- que la zone se raccordant à la goulotte de guidage (21) dans la direction de transport (33), du tracé de transport d'évacuation (37) soit constituée par une bande transporteuse d'évacuation (22), et
-- qu'une bande de transport final (32) se raccorde à la bande de transport d'évacuation (22).

19. Dispositif selon la revendication 18, caractérisé en ce que la bande de transport d'évacuation (22) est susceptible d'être entrainée de façon bidirectionnelle, pour assurer le transport des différents tissus, d'une part, sur la bande transporteuse finale (32) ou, d'autre part, de retour dans le tambour (3).

20. Dispositif selon l'une des revendications 18 ou 19, caractérisé par un dispositif de comptage des tissus sur la bande de transport final (32).

21. dispositif selon la revendication 20, caractérisé par au moins un poste de sortie par éclusage, commandé par capteur, pour des tissus venant de la bande de transport final (32).

22. Dispositif selon la revendication 21, caractérisé par
-- au moins une buse, positionnée latéralement sur la bande transporteuse (32), pour souffler un fluide en surpression, transversalement par rapport la direction de transport, et
-- sur le côté, opposé à la buse, de la bande transporteuse (32), dans sa direction de transport, quelque peu décalé par rapport à la buse, et une corbeille de captage pour capter les tissus évacués par éclusage.

23. Dispositif selon la revendication 22, caractérisé par de l'air comprimé comme fluide.

24. Dispositifs selon la revendication 23, caractérisé en ce que la corbeille de captage présente un fond ouvert pour laisser tomber le produit sorti par éclusage sur une bande d'évacuation par éclusage (40) disposée au-dessous de la corbeille de captage.

25. Dispositif selon l'une des revendications 22 ou 23, caractérisé par un déclenchement, commandé par le poids, du poste de sortie par éclusage.

26. Dispositif selon l'une des revendications précédentes, caractérisé par un détecteur de métaux (39) utilisé comme capteur pour le déclenchement du poste de sortie par éclusage.
